# EUROPEAN PATENT APPLICATION

(11) **EP 2 408 076 A1**
(43) Date of publication of application: **18.01.2012**
(21) Application number: 10169805.8
(22) Date of filing: 16.07.2010
(51) Int. Cl.: H02B 13/065, H02B 13/035, H01H 33/66

(54) **Electric switchgear panel with improved arc detection system, and related arc detecting method**

(71) Applicant: ABB Technology AG, 8050 Zürich (CH)
(72) Inventor: Colombo, Andrea, 27036, Mortara (PV) (IT); Gemme, Carlo, 27100, Pavia (IT); Pasinetti, Michele, 24060, Vigano San Martino (BG) (IT)
(74) Representative: De Santis, Giovanni

(57) **Abstract**

A switchgear panel comprising:
- an enclosure delimiting an internal volume which is divided into one or more compartments suitable to accommodate corresponding electrical or electronic equipment;
- a single or multi-pole circuit breaker which is positioned inside one of the compartments and has, for each pole, a housing chamber accommodating at least a couple of contacts which can be actuated during operation of the circuit breaker. The housing chamber is arranged so as to be at least partially opaque to UV light generated inside it following actuation of the contacts;
- an electric arc detection assembly which is configured to detect the presence of UV light inside the enclosure and to discriminate, based on the level of UV light detected, between a possible electric arc occurring in the internal volume and a circuit breaker operation involving actuation of the couple of contacts.

## Description

The present invention relates to an electric switchgear panel with an improved arc detection system, and to a related arc detecting method.

As known, in electrical energy distribution systems, switchgear panels are electrical components used as node points, while cables and overhead lines represent the conjunction of the various nodes.

From a structural point of view, known switchgear panels, which can be also indicated with the equivalent terms of electric switchboards, or simply switchgear or electric panels, or similar definitions, usually comprise a metallic cubicle that is internally divided into several compartments or cells housing various apparatuses and equipment. For example, one compartment houses a switching unit, such as a circuit breaker; a second compartment houses main power connections, such as bus-bars, feeding power from an electrical source; a further compartment houses a system of cables suitable to be connected to a load, for example an electrical motor.

Depending on the applications, switchgear panels may comprise other components, such as current transformers, voltage transformers, et cetera.

During the working life of a switchgear panel, it is possible that some electrical faults or malfunctioning occur, such as short circuits, current overloads, and in particular internal arcing, also known as arc flash events.

Arcing events, e.g. arcing faults or flashes occur when electric current arcs strikes between two conductors inside the switchgear cabinet, e.g. between phase conductors, phase and neutral conductors, between the contacts of the circuit breaker used, or between a conductor and ground, et cetera. When such arcing faults, in particular in medium- to high-voltage power applications wherein levels of energy involved are quite significant, the ionized gas associated with them may be released at pressures and temperatures sufficient to severely damage or destroy the switchgear panel itself, and/or the devices and equipment housed inside, and be also potentially dangerous for operating personnel.

For such reasons, several solutions have been introduced in order to prevent or at least limit the occurrence and effects of electric arcs.

For instance, one solution adopted in order to limit the resulting effects of a struck electric arc foresees the use of arc-resistant switchgear cabinets able to withstand the pressure waves and temperatures of the hot gases associated with an arcing fault for a defined time before a protection device such as a relay detects the fault and operates a switching element to clear it. In addition, there are provided also suitable paths for channelling and venting the hot gases and flames out from the internal compartments in the event of an arcing fault.

Most known solutions are however focused on an early detection of an occurring electric arc with a consequent fast intervention devoted to prevent or mitigate its undesired effects at an early stage.

To this end, many solutions have been used in alternative or in combination to each other. For example, a first solution foresees the evaluation of current perturbations in a conductor indicative of an arcing event; however, this solution may require onerous processing demands resulting in an undesirably long reaction time for identifying an arcing event. Another solution uses pressure sensors to monitor the increase in pressure indicative of an arcing event; also this solution may require significant time before pressure increases to detectable levels, resulting in long reaction times before mitigating an arcing event.

One of the most used solutions for detecting arcing events involves the use of optical detectors, such as optical fibres, to detect the arc flash associated with an arcing event. However, this solution may result in erroneous detections as the light sensors may detect light from sources independent from electric arcs. This would result in unwarranted tripping of protection units which would put out of service the switchgear panel or parts thereof.

Such undesired interventions have been partially limited by combining the detection of light possibly linked to an occurring electric arc with monitoring of the current levels flowing into the part of the electric systems monitored.

Although known solutions perform in a quite satisfying way, there is still room and desire for further improvements, in particular as regard the possibility to clearly identify the presence of a true electric arc occurring inside any of the compartments of the switchgear cabinet and hence to cause the intervention of protection units putting the entire switchgear panel out of service only when strictly necessary.

This desire is fulfilled by a switchgear panel according to the present invention which comprises:
- an enclosure delimiting an internal volume which is divided into one or more compartments suitable to accommodate corresponding electrical or electronic equipment;
- a single or multi-pole circuit breaker positioned inside one of said compartments, said circuit breaker having, for each pole, a housing chamber accommodating at least a couple of contacts which can be actuated during operation of said circuit breaker, between a circuit breaker closed position where they are electrically coupled and a circuit breaker open position where they are electrically separated, wherein said housing chamber is arranged so as to be at least partially opaque to UV light generated inside it following actuation of said contacts; and
- an electric arc detection assembly which is configured to detect the presence of UV light inside said enclosure and to discriminate, based on the level of UV light detected, between a possible electric arc occurring in said internal volume and a circuit breaker operation involving actuation of said couple of contacts.

The present invention provides also a method for detecting the presence of an electric arc inside an enclosure of an electric switchgear panel characterized in that it comprises:
- providing inside said enclosure a single or multi-pole circuit breaker, said circuit breaker having, for each pole, a housing chamber accommodating at least a couple of contacts which can be actuated during operation of said circuit breaker, between a circuit breaker closed position where they are electrically coupled and a circuit breaker open position where they are electrically separated, wherein said housing chamber is arranged so as to be at least partially opaque to UV light generated inside it following actuation of said contacts;
- providing an electric arc detection assembly, wherein said electric arc detection assembly is arranged for detecting the presence of UV light inside said enclosure and discriminating, based on the level of UV light detected, between a possible electric arc occurring in said enclosure and a circuit breaker operation involving actuation of said couple of contacts. Further characteristics and advantages of the invention will emerge from the description of preferred, but not exclusive embodiments of the switchgear panel and method according to the invention, non-limiting examples of which are provided in the attached drawings, wherein:
   figure 1 is a perspective view showing an electric switchgear panel according to the invention;
   figure 2 is a side view schematically illustrating an exemplary electric switchgear panel according to the invention;
   figure 3 is a schematic representation of a pole of a circuit breaker;
   figure 4 is a perspective view illustrating an exemplary circuit breaker used in the electric switchgear panel and method according to the invention;
   figure 5 is a schematic representation of an optical sensor used in the switchgear panel and method according to the invention;

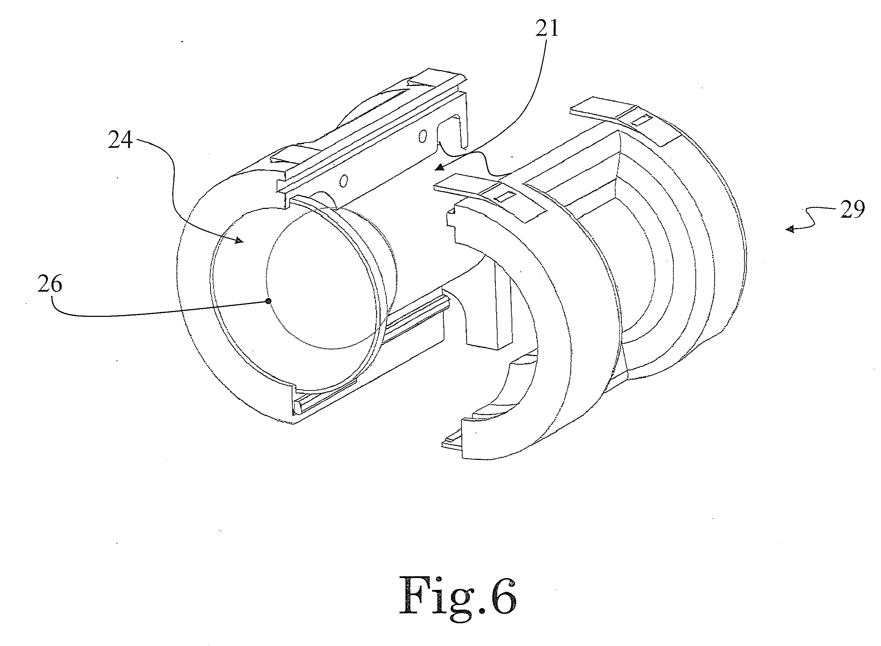

   figure 6 is a perspective view illustrating, partially, a possible embodiment of an optical sensor used in the switchgear panel and method according to the invention;
   figure 7 is a schematic flow diagram of a method according to the present invention.

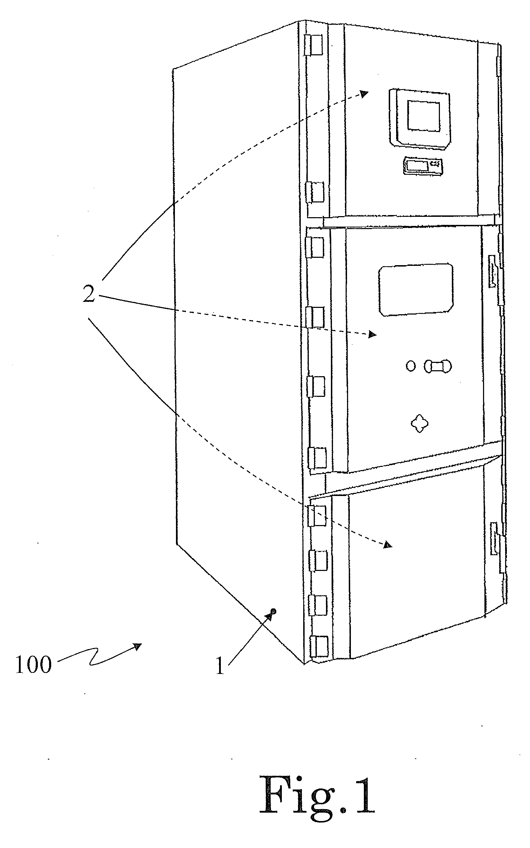

Figure 1 shows an example of an electric switchgear panel according to the invention, indicated by the overall numeral reference 100 which comprises according to known solutions, an enclosure 1 having a plurality of walls which all together define an inside volume; in the example illustrated, the inside volume of the enclosure 1 is divided into one or more compartments 2 suitable to accommodate various electrical or electronic equipment and/or devices.

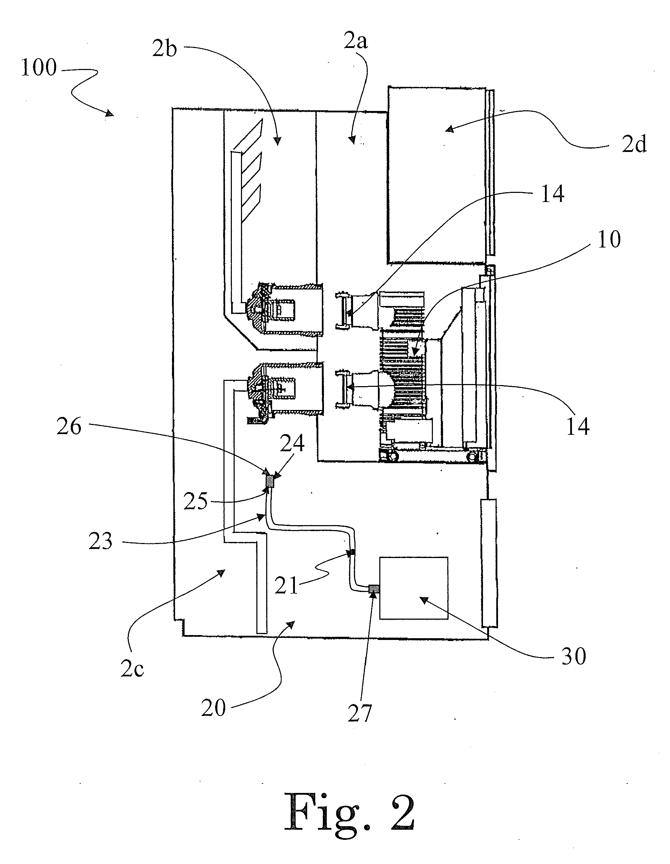

At a first step 101, inside one compartment 2a of the switchgear panel 100 there is provided a single or multi-pole (also indicated as single or multi-phase) circuit breaker 10; in the exemplary embodiment illustrated in figure 2 there are for instance three compartments housing power parts where an internal arc event could occur, e.g. a first compartment 2a for housing the circuit breaker 10, a second compartment 2b for housing a bus-bar system, a third compartment 2c for housing connecting cables, a fourth compartment 2d for housing other components, such as control electronics.

Clearly, the number of compartments and related apparatuses, components and devices housed therein can vary according to the specific applications.

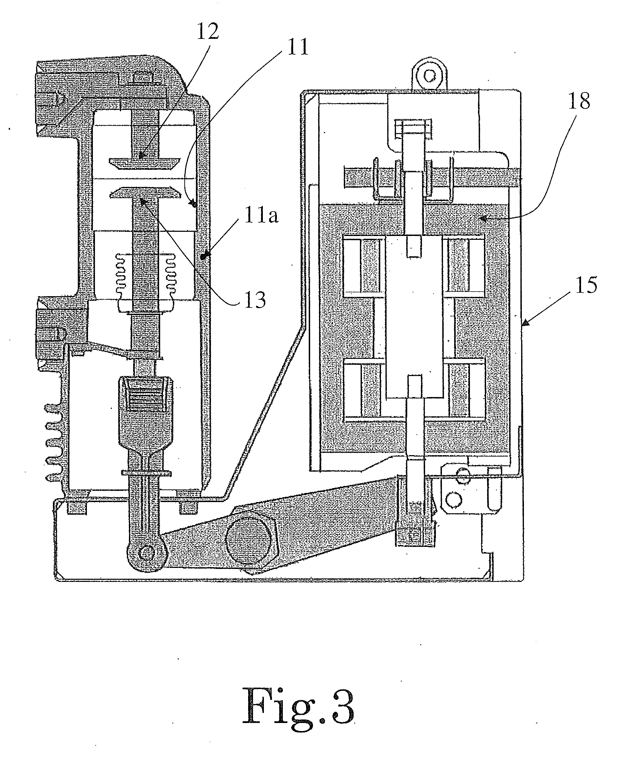

As schematically illustrated in figure 3 and according to solutions well known in the art and therefore not described herein in details, the circuit breaker 10 comprises for each pole a housing chamber 11 (usually indicated as the arc chamber) delimiting an interior space which accommodates at least a couple of contacts, namely a fixed contact 12 and a corresponding movable contact 13, which can be actuated, during operation of the circuit breaker, between a circuit breaker closed position where they are electrically coupled and a circuit breaker open position where they are electrically separated.

During operation of the circuit breaker, in particular when the contacts are separated, usually inside the housing chamber 11 there is generated light, especially when an electric arc strikes between the contacts at high current; advantageously, in the switchgear panel 100 and method according to the present invention, the housing chamber 11 is arranged so as to be at least partially opaque to light, especially to UV light, generated inside it following actuation of the contacts 12-13. Such opaqueness may be achieved by using a suitable material or combination of materials/layers for the walls of the housing chamber 11 delimiting the interior space inside which the contacts are housed, and/or by coating the housing chamber with a material or combination of materials/layers opaque to light, and/or both. For example, the housing chamber may be realized for different current interruption technologies by cast resin or filament winding tubes.

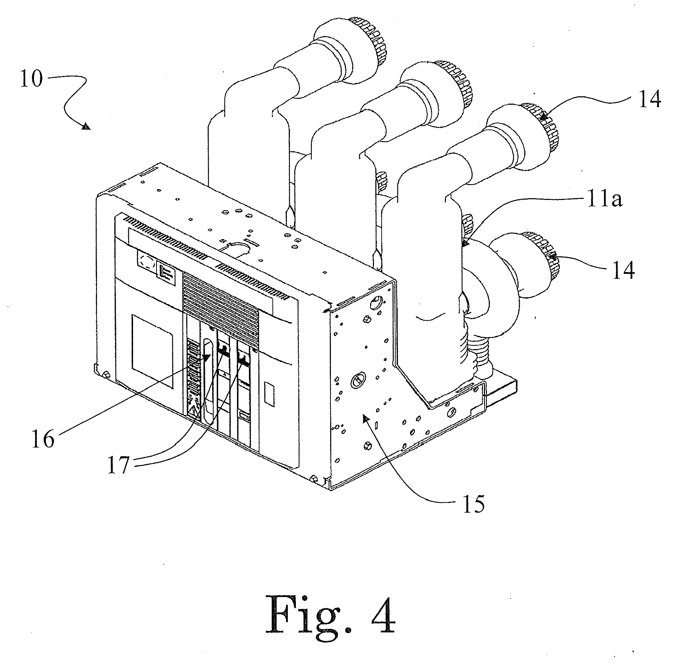

In the exemplary embodiment illustrated in figure 4, the circuit breaker 10 is a three-pole (or three-phase) vacuum circuit breaker. For each phase, a vacuum bottle 11, made for example of glass-like material, is embodied into a cast-resin envelope 11a and contains a fixed contact 12 and a corresponding movable contact 13 for opening/closing the corresponding phase of an electric line along which the circuit breaker 10 is placed. In this case, the housing chamber 11 according to the invention is formed by the internal bottle 11 coated by the external cast-resin envelope 11a.

Each pole of the circuit breaker 10 illustrated further comprises two sets of contacts 14 for input/output connections with the associated phase. The exemplary circuit breaker 10 illustrated in figure 4 comprises also a front part or compartment 15 which houses the driving mechanism, e.g. levers, springs, et cetera, indicated as a whole in figure 3 by the reference number 18 for actuating the movable contact 13 of each phase, as well as other components such as electronic circuitry. The front face of the compartment 15 features also other elements such a manual opening lever 16, buttons 17, et cetera.

As it will be appreciated by those skilled in the art, the illustrated circuit breaker 10 has to be understood as a non-limiting exemplary embodiment since any circuit breaker suitable for the application can be used (either with mechanical or electromagnetic or what else actuating mechanisms); for example, circuit breaker types "VD4" or "VM1" marketed by ABB^{®} group can be used.

Advantageously, in the method and switchgear panel 100 according to the invention (at the same step 101) there is provided an electric arc detection assembly, indicated by the overall reference 20 in figure 2, which is configured to detect the presence of UV light inside the enclosure 1; in particular, the arc detection assembly 20 is calibrated to discriminate, based on the level of UV light detected, between a possible electric arc occurring in the internal volume of the enclosure 1 (i.e. inside any of the compartments 2 but outside the poles of the circuit breaker) and a condition where light, and in particular UV light, is generated inside the housing chamber 11 following a circuit breaker operation involving the actuation of the contacts 12-13.

Clearly, the electric arc detection assembly 20 and the circuit breaker 10 can be provided inside the enclosure 1 in whatever order with respect to each other.

Preferably, the electric arc detection assembly 20 according to the invention comprises at least one optical sensor which is positioned inside the internal volume of the enclosure 1 and is arranged to detect UV light inside the enclosure 1 itself, and a threshold element which is sensitive to the UV light detected and is arranged so as to be activated when the level of UV light detected exceeds a pre-determined value.

Preferably, the threshold element comprises a photodiode sensitive to UV light.

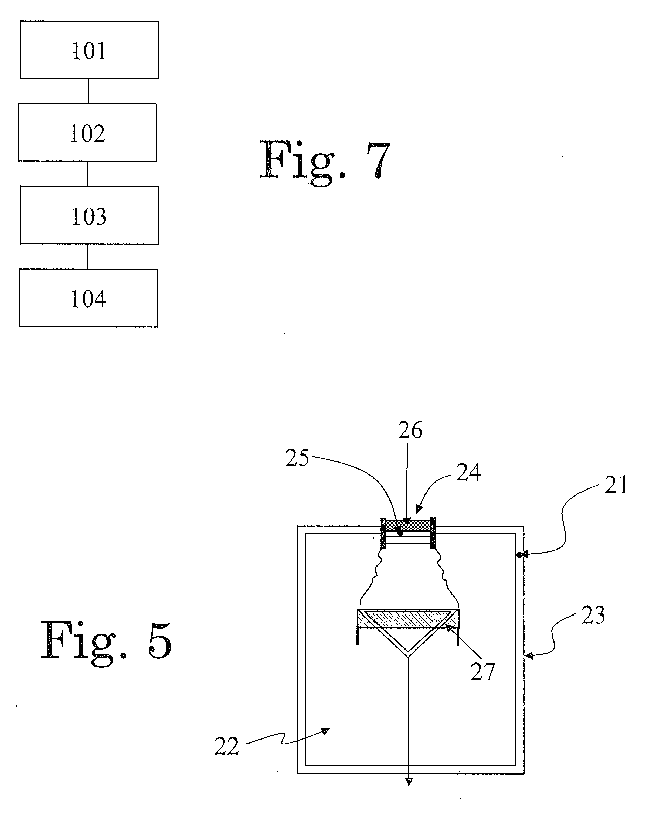

As schematically illustrated in figure 5, the at least one optical sensor comprises a suitably shaped housing 21 enclosing an interior space 22 and whose external surfaces 23 are substantially opaque to light; the housing 21 further comprises at least one light entry point 24 which is capped with a UV band-pass filter 25 so as to allow admission of only UV light inside the interior space 22.

At the entry point 24, there may be provided a lens 26 associated to and positioned below or above the band-pass filter 25, or the lens 26 can be integral with the UV band-pass filter 25 or preferably be arranged so as to directly constitute itself the UV band-pass filter 25. Preferably, the UV band-pass filter 25 is centered at between 250 and 400 µm wavelength, more preferably at 300 µm.

A photodiode 27 is suitably placed in order to receive the UV light admitted inside the space 22 by the filter 25. This photodiode may be placed inside the housing 21 or at a wall thereof, or in any suitable position along the optical path of the admitted UV light.

In particular, according to the invention, it is possible to have only one optical sensor positioned inside any one of the compartments 2, or the optical sensor can be configured so as to pass through more than one compartment and to have a light entry point 24 capped with a corresponding UV band-pass filter 25 at each of the compartment crossed, or it is possible to have one or more optical sensors of the type above described for each compartment.

Figure 2 schematically shows a preferred embodiment of an optical sensor used in the switchgear panel 100 and method according to the invention, positioned for instance inside the compartment 2c.

As illustrated, the optical sensor comprises an optical fiber 21, preferably a flexible optical fiber, which is positioned inside at least one of the compartments 2. The body of the optical fiber forms the housing 21 and has external surfaces 23 which are substantially opaque to light; for example, the optical fiber may be formed by or in any case coated with a plastic or a material opaque to light.

The light entry point 24 is preferably at one end of the fiber itself, and is provided with a lens 26 preferably structured in order to constitute itself a UV band-pass filter, or in alternative coupled with an associated UV band-pass filter 25.

Along the optical fiber 21, or at the other end thereof, there is placed the UV-light sensitive photodiode 27; such photodiode 27 can be provided also at the interface with electronic circuitry or even embedded in such electronic circuitry which circuitry can be for example associated with or part of a protection unit, e.g. a protection relay.

According to a preferred embodiment, in the switchgear panel 100 and method according to the invention in each relevant compartment 2 of the enclosure 1 there is provided a corresponding optical fiber 21 with associated UV band-pass filter 25 and photodiode 27, as above described.

Alternatively, it is possible to have only one optical fiber 21 which passes through more than one compartment 2; in this case, along the body of the optical fiber 21 there may be provided more entry points 24, e.g. one for each compartment 2 crossed, while a unique photodiode 27, e.g. positioned at one end of the optical fiber 21 itself may be sufficient.

According to the applications, it is also possible to adopt a mixed solution, i.e. some compartments 2 have each a corresponding assembly optical fiber 21-UV band-pass filter 25 and photodiode 27, while some other compartments may be provided with a unique optical fiber 21 crossing them and being provided with respective UV band-pass filters 25 and an associated photodiode 27.

In practice, during operation of the switchgear panel 100, when there is an arcing event in any of the compartments 2, i.e. a so called electric arc in air, light is generated inside the internal volume of the enclosure 1 which light, as known, when due to an electric arc comprises a significant content of radiation into the UV spectrum.

Light can be also generated inside the housing chamber 11 of the circuit breaker 10 during its normal opening/closing operations with load or fault currents which may be accompanied by related electric arcs striking between the contacts 12-13.

According to the invention, the housing chamber 11 filters, at least partially, and therefore lowers the UV level of radiation generated inside the housing chamber 11 and passing though it towards the internal volume of the enclosure 1; in turn, the arc detection assembly 20 is properly calibrated to discriminate, based on the level of UV light detected, between a possible electric arc occurring in any of the compartments 2 but outside the housing chamber 11, and an electric arc occurring inside a housing chamber of the circuit breaker following actuation of the couple of contacts 12-13.

More in particular when there is light generated inside the internal volume of the enclosure 1, either because of an arcing event in any of the compartments 2 or coming from the interior area of the housing chamber 11 following a circuit breaker operation, at step 102 the arc detection assembly 20 detects only the UV content of such light which is filtered by the centered UV band-pass filter 25; the UV light thus captured is channeled towards the threshold element, i.e. the photodiode 27.

The photodiode 27 is calibrated so as that it is activated only when the level of UV light detected and received exceeds a predetermined value; in particular, the photodiode 27 is calibrated so as (step 103):
- when the UV light comes from the internal area of the housing chamber 11, its level is not sufficient enough for activating the photodiode 27 thanks to the pre-filtering action exerted by the hosing chamber 11 and the UV band-pass filter 25;
- if instead the UV light comes directly from an arcing event inside any compartment 2 (but from outside the housing chamber 11) the UV light detected and filtered only by the UV band-pass filter 25 has a level which exceeds the predetermined threshold.

Therefore, in the latter case situation, the photodiode 27 is activated and generates (step 104) an electrical signal in input to a protection unit, e.g. a protective relay, schematically indicated in figure 2 by the reference number 30.

The protection unit 30 then triggers an appropriate intervention, e.g. tripping of an upstream circuit breaker devoted to protect the entire switchgear panel 100.

Such a protection unit 30 can be positioned inside the enclosure 1 or outside; further, in case there are more optical sensors used in the switchgear panel 100, there can be used only a unique protection unit 30 common to all sensors, or each optical sensor can be associated to a dedicated protection unit, or a mixed solution can be adopted.

It is evident from the above that the method and switchgear panel 100 according to the invention offer an improved arc detecting system with significant advantages over the known prior art and according to a solution extremely simple and effective. Indeed, the arc detection assembly 20 described, allows to properly and safely discriminating between an electric arc occurring internally to one of the compartments 2 but external to the housing chamber of the circuit breaker, from normal operations of the circuit breaker itself with actuation of contacts and related light generation occurred inside the housing chamber itself for faults outside the switchgear panel 100, for example on a cable system supplying a load.

In this way it is possible to prevent putting out of service the entire switchgear panel 100 only when strictly necessary, i.e. when there is an arcing event in one of the compartments.

The method and electric switchgear panel 100 thus conceived may undergo numerous modifications and come in several variants, all falling within the scope of the inventive concept as defined by the appended claims; for the example, the optical sensor(s) or any part thereof may be differently shaped. For example, figure 7 shows a possible embodiment of an optical sensor which can be used in the method and switchgear panel according to the invention. As illustrated, the optical sensor comprises an optical fiber 21 (only a portion of which is illustrated in figure 7); a lens 26 is operatively associated at an end of the optical fiber 21 and is preferably structured so as to constitute itself an UV band-pass filter. The lens 26 is positioned at an entry point 24 of a supporting housing 29. In the exemplary embodiment illustrated in figure 7, the housing 29 is formed by two half-shells connectable to each other so as to embrace the lens 26 and at least the end of the fiber 21 itself. The housing 29 can extend just at the lens and around a very short portion of the optical fiber 21 or for a longer part thereof. The component materials and dimensions of the switchgear may be of any type, according to needs and the state of the art and provided they are compatible with the scope of the invention.

## Claims

1. A switchgear panel (100) comprising an enclosure (1) delimiting an internal volume which is divided into one or more compartments (2) suitable to accommodate corresponding electrical or electronic equipment, **characterized in that** it comprises:
- a single or multi-pole circuit breaker (10) positioned inside one of said compartments (2), said circuit breaker (10) having, for each pole, a housing chamber (11) accommodating at least a couple of contacts (12, 13) which can be actuated during operation of said circuit breaker, between a circuit breaker closed position where they are electrically coupled and a circuit breaker open position where they are electrically separated, wherein said housing chamber (11) is arranged so as to be at least partially opaque to UV light generated inside it following actuation of said couple of contacts;
- an electric arc detection assembly (20) which is configured to detect the presence of UV light inside said enclosure (1) and to discriminate, based on the level of UV light detected, between a possible electric arc occurring in said internal volume and a circuit breaker operation involving actuation of said couple of contacts (12-13).

2. The switchgear panel (100) according to claim 1 **characterized in that** said electric arc detection assembly (20) comprises at least one optical sensor which is positioned inside said internal volume and is arranged to detect UV light inside said enclosure (1).

3. The switchgear panel (100) according to one or more of the preceding claims **characterized in that** said at least one optical sensor comprises a threshold element (27) sensitive to UV light detected, said threshold element being arranged so as to be activated when the level of UV light detected exceeds a pre-determined value.

4. The switchgear panel (100) according to one or more of the preceding claims **characterized in that** said at least one optical sensor comprises a housing (21) enclosing an interior space (22) and whose external surfaces (23) are substantially opaque to light, said housing (21) further comprising a light entry point (24) which is capped with a UV band-pass filter (25).

5. The switchgear panel (100) according to one or more of the preceding claims **characterized in that** said threshold element (27) comprises a photodiode (27) sensitive to UV light.

6. The switchgear panel (100) according to one or more of the preceding claims **characterized in that** said UV band-pass filter (25) is centered at between 250 and 400 nm wavelength.

7. The switchgear panel (100) according to one or more of the preceding claims **characterized in that** said at least one optical sensor comprises at least one optical fiber (21) which is positioned inside at least one of said one or more compartments (2), said at least one optical fiber (21) comprising external surfaces (23) substantially opaque to light, a light entry point (24) which is capped with a UV band-pass filter (25) so as to admit UV light inside the optical fiber itself, and a UV-light sensitive photodiode (27) which is adapted to generate an electric signal indicative of an electric arc occurring inside said internal volume when the level of UV light detected exceeds a predetermined threshold.

8. The switchgear panel (100) according to claim 7 **characterized in that** said arc detection assembly (20) comprises a plurality of optical sensors, each optical sensor comprising an optical fiber (21) which is positioned inside a corresponding compartment (2) and has external surfaces (23) substantially opaque to light, a light entry point (24) which is capped with a UV band-pass filter (25) so as to admit UV light inside the optical fiber itself, and a UV-light sensitive photodiode (27) which is arranged to generate an electric signal indicative of an electric arc occurring inside the corresponding compartment (2) when the level of UV light detected exceeds a predetermined value.

9. A method for detecting the presence of an electric arc inside an enclosure (1) of an electric switchgear panel (100) **characterized in that** it comprises:
- providing (101) inside said enclosure (1) a single or multi-pole circuit breaker (10), said circuit breaker (10) having, for each pole, a housing chamber (11) accommodating at least a couple of contacts (12, 13) which can be actuated during operation of said circuit breaker (10), between a circuit breaker closed position where they are electrically coupled and a circuit breaker open position where they are electrically separated, wherein said housing chamber (11) is arranged so as to be at least partially opaque to UV light generated inside it following actuation of said contacts (12, 13);
- providing (101) an electric arc detection assembly (20), wherein said electric arc detection assembly (20) is arranged for detecting (102) the presence of UV light inside said enclosure (1) and discriminating (103), based on the level of UV light detected, between a possible electric arc occurring in said internal volume and a circuit breaker operation involving actuation of said couple of contacts.

10. The method according to claim 9 **characterized in that** it, said discriminating (103) comprises activating a threshold element (27) sensitive to UV light detected and generating (104) an electric signal indicative of an electric arc occurring inside the enclosure (1) when the level of UV light detected exceeds a predetermined value.
